# EUROPÄISCHE PATENTSCHRIFT

(11) **EP 1 069 364 B1**
(45) Veröffentlichungstag und Bekanntmachung des Hinweises auf die Patenterteilung: **17.09.2003**
(21) Anmeldenummer: 00114386.6
(22) Anmeldetag: 05.07.2000
(51) Int. Cl.: F16L 37/088, F16L 47/06, B29C 65/00

(54) **Fluidkupplung**
Fluid coupling
Raccord pour fluide

(30) Priorität: 15.07.1999 DE 19933061
(43) Veröffentlichungstag der Anmeldung: 17.01.2001
(73) Patentinhaber: Rasmussen GmbH, 63477 Maintal (DE)
(72) Erfinder: Bahner, Frank, 63071 Offenbach (DE)
(74) Vertreter: Knoblauch, Andreas, Dr.-Ing.

(56) Entgegenhaltungen:
- WO-A-97/03314
- DE-U- 29 622 122
- US-A- 5 239 944
- LAND W: "REIBSCHWEISSEN NACH DEM ROTATIONS- UND VIBRATIONSVERFAHREN" PLASTVERARBEITER,DE,ZECHNER UND HUETHIG VERLAG GMBH. SPEYER/RHEIN, Bd. 34, Nr. 8, 1. August 1983 (1983-08-01), Seiten 698-699, XP000677074 ISSN: 0032-1338

## Beschreibung

Die Erfindung bezieht sich auf eine Fluidkupplung mit einem rohrförmigen Aufnahmeteil und einem rohrförmigen Steckteil, die zusammensteckbar und in dieser Lage arretierbar sind, und mit einem zwischen Steckteil und Aufnahmeteil in einer Ringnut des Aufnahmeteils angeordneten Dichtring, wobei das Aufnahmeteil zwei zusammengesteckte und verschweißte Abschnitte aufweist, die gemeinsam die Ringnut begrenzen, und der eine Abschnitt mit seinem einen Ende in eine stirnseitige, zur mittleren Längsachse dieses Abschnitts konzentrische Nut des einen Endes des anderen Abschnitts eingeführt ist.

Eine Fluidkupplung dieser Art ist aus der DE 39 29 723 C2 bekannt. Wie die Verschweißung im einzelnen erfolgt, ist nicht näher angegeben.

Um bei einer anderen bekannten Fluidkupplung mit einem rohrförmigen Aufnahmeteil und einem rohrförmigen Steckteil, die zusammensteckbar und in dieser Lage arretierbar sind, und mit einem zwischen Steckteil und Aufnahmeteil in einer Ringnut des Aufnahmeteils angeordneten Dichtring (DE 296 22 122 U1) die Herstellung des Aufnahmeteils im Spritzgießverfahren mittels eines möglichst einfachen Formwerkzeugs zu ermöglichen, wird die Ringnut durch einen an der Innenwandung des Aufnahmeteils angeformten Absatz und einen im axialen Abstand zum Absatz angeordneten, durch Reib- oder Ultraschallschweißen mit der Innenwandung des Aufnahmeteils verbundenen Sperring gebildet.

Demgegenüber entfällt bei der eingangs erwähnten Fluidkupplung der Sperring, während die Form und die Lage des einen Abschnitts des Aufnahmeteils für verschiedene Aufnahmeteile unterschiedlich und die des anderen Abschnitts gleich ausgebildet sein können.

Der Erfindung liegt die Aufgabe zugrunde, die Verbindung der Abschnitte des Aufnahmeteils einer Fluidkupplung der eingangs erwähnten Art sicher und ohne Beeinträchtigung der Dichtheit der Fluidkupplung zu gestalten.

Erfindungsgemäß ist diese Aufgabe dadurch gelöst, daß der in die stirnseitige Nut eingeführte Abschnitt mit seiner Stirnfläche am Boden dieser Nut angeschweißt ist und das Ende des einen Abschnitts einen axial vorstehenden Ringwulst aufweist, der in eine erste umlaufende Rille im Boden der Nut auf der einen Seite der Schweißnaht eingreift.

Bei dieser Lösung ist die Schweißnaht im wesentlichen auf den Boden der Nut begrenzt und das Austreten von beim Verschweißen erweichtem Material auf die Außenoder Innenseite des Aufnahmeteils und damit die Ausbildung eines störenden Schweißwulstes, der insbesondere an der Berührungsfläche zwischen Aufnahme- und Steckteil die Dichtheit der Fluidkupplung beeinträchtigen würde, weitgehend verhindert. Zusätzlich ergibt sich eine Art Labyrinthdichtung gegen den Austritt von Schweißmaterial durch den Eingriff des Ringwulstes in die Rille.

Ferner kann der Boden der stirnseitigen Nut eine zweite umlaufende Rille auf der anderen Seite der Schweißnaht aufweisen, in der auf der anderen Seite der Schweißnaht verdrängtes Schweißmaterial aufgenommen werden kann.

Vorzugsweise ist dafür gesorgt, daß die Lage der Schweißnaht so gewählt ist, daß der Dichtring die Schweißnaht bei eingestecktem Steckteil gegen eine Berührung mit dem Fluid abdichtet. Auf diese Weise wird auch dann, wenn die Schweißnaht im Laufe der Zeit undicht werden sollte, zum Beispiel durch Ausübung starker Kräfte auf die Schweißnaht, sei es durch eine Bedienungsperson, die versucht, einen auf dem zweiten Rohrstück festsitzenden Schlauch gewaltsam abzuziehen, oder durch starke Vibrationen, denen durch die Fluidkupplung verbundene Fluidleitungen während des Betriebs ausgesetzt sind, für eine zusätzliche Abdichtung der Schweißnaht durch den Dichtring gesorgt.

Außerdem ist es möglich, daß das Aufnahmeteil ein die verschweißten Abschnitte aufweisendes erstes Rohrstück und ein in einem Winkel zu dem ersten Rohrstück stehendes zweites Rohrstück aufweist, daß das Steckteil mit dem ersten Rohrstück in einer vorbestimmten relativen Drehwinkellage zusammensteckbar und in dieser Lage am ersten Rohrstück arretierbar ist und daß die beiden Abschnitte des ersten Rohrstücks in einer solchen relativen Drehwinkellage verschweißt sind, daß das zweite Rohrstück im zusammengesteckten Zustand von Aufnahmeteil und Steckteil die vorbestimmte Drehwinkellage relativ zum Steckteil aufweist. Bei dieser Ausbildung ist es gleichzeitig möglich, die beiden Rohrstücke in unterschiedlichen relativen Drehwinkellagen entsprechend dem gewünschten Anwendungsfall miteinander zu verschweißen, so daß sich auch in einem solchen Fall, in dem sich lediglich die Drehwinkellage des zweiten Rohrstücks relativ zum Steckteil, mit dem das erste Rohrstück drehfest verbunden wird, ändert, die Herstellung vereinfacht, da man für die verschiedensten Drehwinkellagen mit denselben Formwerkzeugen auskommt.

Vorzugsweise weist das Aufnahmeteil thermoplastischen Kunststoff auf. Dieses Material läßt sich leicht in die gewünschten Formen bringen.

Insbesondere können die beiden Abschnitte des Aufnahmeteils durch Reib- oder Ultraschallschweißen verbunden sein. Diese Verfahren lassen sich auf einfache Weise ohne zusätzliche Wärmequelle ausführen.

Die Erfindung und Ihre Weiterbildungen werden nachsehend anhand der beiliegenden Zeichnungen bevorzugter Ausführungsbeispiele näher beschrieben. Es zeigen:
- Fig. 1: einen Axialschnitt durch einen Teil einer erfindungsgemäßen Fluidkupplung, die zum Verbinden zweier Fluidleitungen dient,
- Fig. 2: eine perspektivische Ansicht eines Aufnahmeteils der Fluidkupplung nach Fig. 1,
- Fig. 3: eine Seitenansicht des Aufnahmeteils der Fluidkupplung nach Fig. 1,
- Fig. 4: eine Seitenansicht eines einteilig aus einem Rohrstück und einem Abschnitt des Aufnahmeteils nach Fig. 3 gebildeten rechtwinkligen Rohrs,
- Fig. 5: eine Vorderansicht des Aufnahmeteils nach Fig. 3,
- Fig. 6: eine andere Seitenansicht eines Abschnitts des Aufnahmeteils nach Fig. 3,
- Fig. 7: eine Seitenansicht eines gegenüber den Fig. 1 bis 4 abgewandelten, geradlinigen Rohrs, dessen einer Endabschnitt mit dem Abschnitt nach Fig. 6 verschweißt werden kann, um ein geradliniges Aufnahmeteil einer erfindungsgemäßen Fluidkupplung zu bilden,
- Fig. 8: den Axialschnitt I-I durch das Aufnahmeteil nach Fig. 1,
- Fig. 9: eine Vergrößerung des eingekreisten Ausschnitts der Fig. 8,
- Fig. 10: eine Abwandlung des Aufnahmeteils nach den Fig. 1 bis 9, bei der die Schweißnaht der beiden Abschnitte des Aufnahmeteils gegenüber den Ausführungsbeispielen nach den Fig. 1 bis 9 relativ zum Dichtring versetzt ist, und
- Fig. 11: eine vergrößerte Darstellung des eingekreisten Ausschnitts nach Fig. 10.

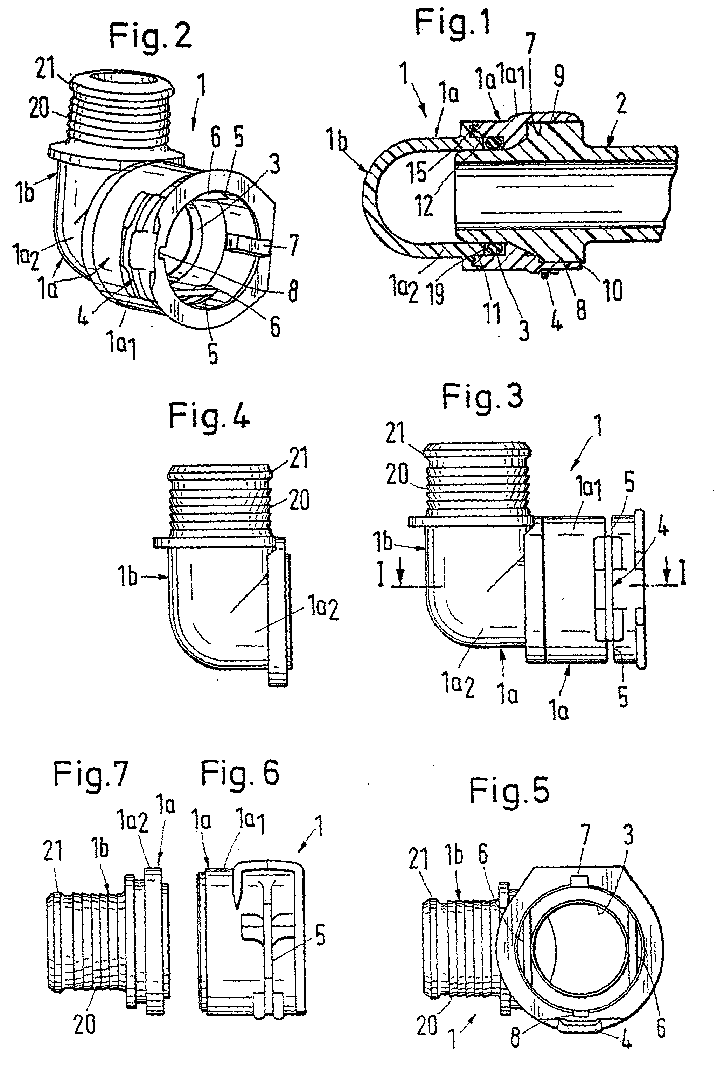

Die in Fig. 1 dargestellte Fluidkupplung ist eine Steckkupplung zum Verbinden zweier nicht dargestellter Fluidleitungen und besteht aus einem abgewinkelten, rohrförmigen Aufnahmeteil 1 aus einem einen thermoplastischen Kunststoff aufweisen Material, einem rohrförmigen, geradlinigen Steckteil 2, das ebenfalls thermoplastischen Kunststoff aufweist, einem Dichtring 3 in Form eines O-Rings und einer etwa U-förmigen Klammer 4 aus einem Draht aus Federstahl.

Das Aufnahmeteil 1 besteht nach den Fig. 1 bis 5, 8 und 9 aus zwei im rechten Winkel zueinander stehenden Rohrstücken 1a und 1b. Das Rohrstück 1a besteht aus zwei miteinander verschweißten Abschnitten 1a₁ und 1a₂. Der Abschnitt 1a₁ hat zwei radial durchgehende, sich quer zu seiner Längsachse erstreckende Schlitze 5, durch die sich jeweils ein Schenkel 6 der außen auf den Abschnitt 1a₁ aufgesetzten und in die Schlitze 5 eingesetzten Klammer 4 wie die Sekante eines Kreises erstreckt. Die Schenkel 6 greifen in eine nicht dargestellte umlaufende Nut des Steckteils 2, um dessen axiale Lage im Aufnahmeteil 1 zu sichern. Ferner hat der Abschnitt 1a₁ zwei sich diametral gegenüberliegende axiale, zu seinem Öffnungsrand hin offene Nuten 7 und 8, in die jeweils eine axiale Rippe 9 und 10 des Steckteils 2 passend eingreift. Die Nuten 7, 8 und Rippen 9, 10 stellen mithin sicher, daß das Steckteil 2 nur in einer vorbestimmten Drehwinkellage relativ zum Aufnahmeteil 1 in dieses eingeführt werden kann, so daß das Rohrstück 1b eine entsprechende vorbestimmte Drehwinkellage relativ zum Steckteil 2 aufweist. Diese Drehwinkellage kann unterschiedlich gewählt werden, je nach dem in welcher relativen Drehwinkellage die Abschnitte 1a₁ und 1a₂ des Rohrstücks 1a miteinander verschweißt werden. Sie hängt davon ab, von welcher Seite her die Klammer 4 nach der Montage der Kupplung zugänglich sein soll.

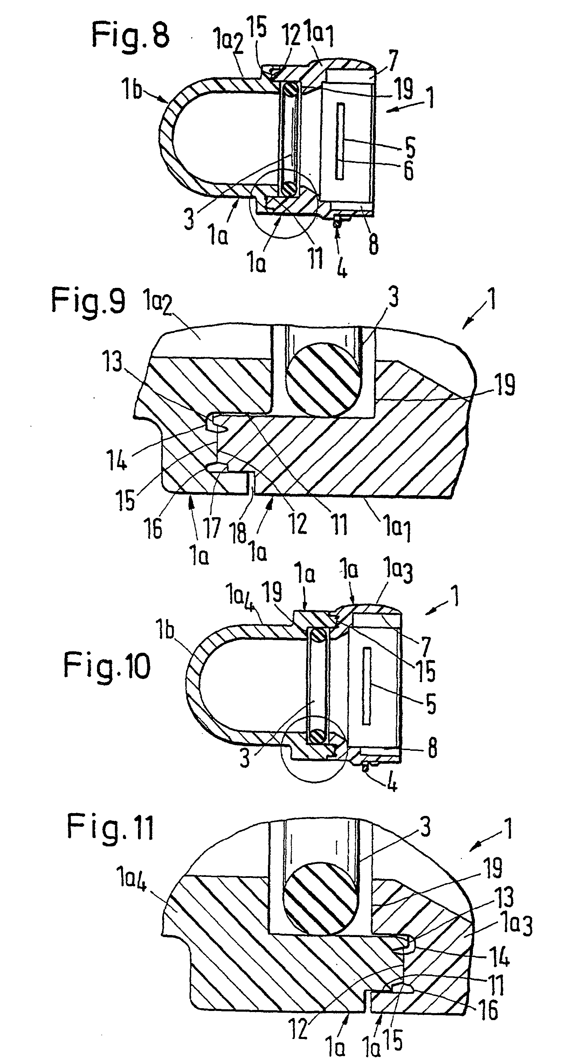

Wie insbesondere die Fig. 1, 8 und 9 zeigen, sind die beiden Abschnitte 1a₁ und 1a₂ des Aüfnahmeteils 1 zusammengesteckt, so daß sie in radialer Richtung formschlüssig verbunden sind. Außerdem ist der eine Abschnitt 1a₁ mit seinem einen Ende in eine stirnseitige, zur mittleren Längsachse dieses Abschnitts 1a₁ konzentrische Nut 11 im einen Ende des anderen Abschnitts 1a₂ eingeführt und mit seiner Stirnfläche am Boden 12 der Nut 11 durch Reibschweißen oder Ultraschallschweißen angeschweißt. Außerdem hat das Ende des einen Abschnitts 1a₁ einen axial vorstehenden Ringwulst 13 (Fig. 9), der in eine erste umlaufende Rille 14 im Boden 12 der Nut 11 auf der einen Seite der Schweißnaht 15 mit Spiel eingreift. Hierdurch ergibt sich in Verbindung mit der Nut 11 und des in sie eingreifenden Endes des einen Abschnitts 1a₁ des Rohrstücks 1a eine Art Labyrinthdichtung für überschüssiges Schweißmaterial, das zur einen Seite der Schweißnaht 15 radial aus dieser austritt. Außerdem stellt das Spiel zwischen Ringwulst 13 und Rille 14 einen kleinen Hohlraum dar, der das überschüssige Schweißmaterial aufnehmen kann. Zusätzlich hat der Boden 12 der Nut 11 eine zweite umlaufende Rille 16 auf der anderen Seite der Schweißnaht 15, die zusammen mit einem Rücksprung 17 des einen Endes des Abschnitts 1a₁ einen weiteren Ringraum zur Aufnahme von überschüssigem Schweißmaterial bildet, der zur anderen Seite der Schweißnaht 15 beim Schweißen austreten kann. Darüber hinaus kann durch ein axiales Spiel am Umfang zwischen den-beiden Abschnitten 1a₁ und 1a₂ eine Ringnut 18 gebildet sein, die einen zusätzlichen Aufnahmeraum für gegebenenfalls noch zwischen dem in die Nut 11 eingreifenden Ende des Abschnitts 1a₁ und der äußeren Umfangswand der Nut 11 austretendes Schweißmaterial bilden kann.

Wie die Fig. 1, 8 und 9 zeigen, begrenzen die beiden verschweißten Abschnitte 1a₁ und 1a₂ des Rohrstücks 1a beziehungsweise des Aufnahmeteils 1 im Rohrstück 1a gemeinsam eine Ringnut 19, die den Dichtring 3 zwischen dem Steckteil 2 und dem Aufnahmeteil 1 aufnimmt. Diese Ausbildung hat den Vorteil, daß die Abschnitte 1a₁ und 1a₂ in einer beliebigen relativen Drehwinkellage miteinander verbunden werden können, wenn die Klammer 4 entsprechend den jeweiligen Platzverhältnissen an der Einbaustelle nur von einer vorbestimmten Seite her ungehindert zugänglich ist und die Steckkupplung daher so eingebaut werden muß, daß die.Klammer bei der Herstellung der Steckverbindung zwischen den beiden Fluidleitungen oder beim Entkuppeln von dieser Seite her zugänglich ist. Gegebenenfalls müssen daher für die Herstellung der Kupplung nicht verschiedene Formwerkzeuge entsprechend der jeweiligen geforderten Einbaulage der Klammer 4 angefertigt werden. Ein weiterer Vorteil besteht darin, daß zur Herstellung verschiedener Aufnahmeteile 1, die sich beispielsweise in der Anzahl der mit dem Rohrstück 1a verbundenen Rohrstücke 1b und/oder der Form der Rohrstücke 1b unterscheiden, der Abschnitt 1a₁ für die verschiedensten Aufnahmeteile 1 mit dem gleichen Formwerkzeug hergestellt werden kann. So zeigt Fig. 7 ein Rohrstück 1b, das relativ zum Rohrstück 1a nicht abgewinkelt, sondern koaxial zu diesem ausgebildet ist, aber ebenso wie das Rohrstück 1b nach den Fig. 1 bis 5 und 8, 9 einen mit einer Vielzahl kleinerer Halterippen und einer größeren Halterippe 21 versehenen Anschlußabschnitt zur Befestigung eines Schlauches mittels einer Schlauchschelle aufweist. Statt dessen könnten die Halterippen 20 auch weggelassen werden oder eine gegenüber den dargestellten Halterippen 20 entgegengesetzte Neigung aufweisen. Wie die Fig. 6 und 7 zeigen, können die Abschnitte 1a₁ und 1a₂ im übrigen ebenso ausgebildet sein wie bei dem zuvor geschilderten Ausführungsbeispiel.

Bei den Aus führungsbe i spielen nach den Fig. 1 bis 9 liegt die Schweißnaht 15 in der Darstellung nach den Fig. 1, 8 und 9 links vom Dichtring 3. Außerdem muß bei O-Ringen, wie dem Dichtring 3, seitlich vom Dichtring 3 ein kleines Spiel verbleiben, um eine übermäßige Verpressung des Dichtrings zu vermeiden. Wenn dann ein Druckfluid durch die Kupplung im eingekuppelten Zustand nach Fig. 1 strömt, kann es zwischen Aufnahmeteil 1 un Steckteil 2 hindurch sowie durch den Spielraum zwischen der die eine Seite der Ringnut 19 begrenzende Stirnfläche des Abschnitts 1a₂ und den Dichtring 3 hindurch bis zur Schweißnaht 15 eindringen. Wenn die Schweißnaht 15 dann, sei es alterungsbedingt oder aufgrund unsachgemäßer Behandlung der Kupplung, ein geringfügiges Leck aufweist, kann das Fluid auf diesem Wege entweichen, was insbesondere dann unerwünscht ist, wenn es sich bei dem Fluid um Kühlwasser eines Verbrennungsmotors oder eine brennbare Flüssigkeit, wie Benzin oder Öl, oder um ein brennbares Gas handelt.

Bei der Abwandlung nach den Fig. 10 und 11 ist die Lage der Schweißnaht 15 daher so gewählt, daß der Dichtring 3 die Schweißnaht 15 bei eingestecktem Steckteil 2 gegen eine Berührung mit dem Fluid abdichtet. Zu diesem Zweck sind die Abschnitte 1a₃ und 1a₄ an ihrer Verbindungsstelle umgekehrt gegenüber dem ersten Ausführungsbeispiel ausgebildet. Das heißt, die Nut 11 ist in der Stirnfläche des Abschnitts 1a₃ ausgebildet und ebenso wie die Nut 11 des ersten Ausführungsbeispiels neben der Schweißnaht mit Rillen 14 und 16 im Boden 12 versehen, während das Ende des mit dem Rohrstück 1b verbundenen Abschnitts 1a₄ in die Nut 11 eingeführt und mit dem in die Rille 14 eingreifenden Ringwulst 13 versehen ist. Bei dieser Ausführung liegt die Schweißnaht 15 in der Darstellung nach den Fig. 10 und 11 rechts vom Dichtring 3. Wenn dann das Fluid in der Steckkupplung bei in das Aufnahmeteil 1 eingegestecktem Steckteil 2 zwischen Aufnahmeteil 1 un Steckteil 2 eindringt, verhindern die Dichtflächen des Dichtrings 3, d.h. die am Boden beziehungsweise Nutengrund der Ringnut 19 anliegende Dichtfläche des Dichtrings 3 und die am Umfang des Steckteils 2 anliegende Dichtfläche des Dichtrings 3, daß das Fluid zur Schweißnaht 15 vordringen kann. Eine weitere Dichtfläche würde dadurch gebildet, daß das Druckfluid den Dichtring 3 gegen die in den Fig. 10 und 11 rechte Seitenwand der Ringnut 19 drücken würde und mithin auch an dieser Grenzfläche kein Druckfluid zur Schweißnaht 15 durchdringen kann.

## Patentansprüche

1. Fluidkupplung mit einem rohrförmigen Aufnahmeteil (1) und einem rohrförmigen Steckteil (2), die zusammensteckbar und in dieser Lage arretierbar sind, und mit einem zwischen Steckteil (2) und Aufnahmeteil (1) in einer Ringnut (19) des Aufnahmeteils (1) angeordneten Dichtring (3), wobei das Aufnahmeteil (1) zwei zusammengesteckte und verschweißte Abschnitte (1a₁, 1a₂; 1a₃, 1a₄) aufweist, die gemeinsam die Ringnut (19) begrenzen, und der eine Abschnitt (1a₁; 1a₄) mit seinem einen Ende in eine stirnseitige, zur mittleren Längsachse dieses Abschnitts (1a₁; 1a₄) konzentrische Nut (11) des einen Endes des anderen Abschnitts (1a₂; 1a₃) eingeführt ist, **dadurch gekennzeichnet, daß** der in die stirnseitige Nut (11) eingeführte Abschnitt (1a₁; 1a₄) mit seiner Stirnfläche am Boden (12) dieser Nut (11) angeschweißt ist und das Ende des einen Abschnitts (1a₁; 1a₄) einen axial vorstehenden Ringwulst (13) aufweist, der in eine erste umlaufende Rille (14) im Boden (12) der Nut (11) auf der einen Seite der Schweißnaht (15) eingreift.

2. Fluidkupplung nach Anspruch 1, **dadurch gekennzeichnet, daß** der Boden (12) der stirnseitigen Nut (11) eine zweite umlaufende Rille (16) auf der anderen Seite der Schweißnaht (15) aufweist.

3. Fluidkupplung nach Anspruch 1 oder 2, **dadurch gekennzeichnet, daß** die Lage der Schweißnaht (15) so gewählt ist, daß der Dichtring (3) die Schweißnaht (15) bei eingestecktem Steckteil (2) gegen eine Berührung mit dem Fluid abdichtet.

4. Fluidkupplung nach einem der Ansprüche 1 bis 3, **dadurch gekennzeichnet, daß** das Aufnahmeteil (1) ein die verschweißten Abschnitte (1a₁, 1a₂; 1a₃, 1a₄) aufweisendes erstes Rohrstück (1a) und ein in einem Winkel zu dem ersten Rohrstück (1a) stehendes zweites Rohrstück (1b) aufweist, daß das Steckteil (2) mit dem ersten Rohrstück (1a) in einer vorbestimmten relativen Drehwinkellage zusammensteckbar und in dieser Lage am ersten Rohrstück (1a) arretierbar ist und daß die beiden Abschnitte (1a₁, 1a₂; 1a₃, 1a₄) des ersten Rohrstücks (1a) in einer solchen relativen Drehwinkellage verschweißt sind, daß das zweite Rohrstück (1b) im zusammengesteckten Zustand. von Aufnahmeteil (1) und Steckteil (2) die vorbestimmte Drehwinkellage relativ zum Steckteil (2) aufweist.

5. Fluidkupplung nach einem der Ansprüche 1 bis 4, **dadurch gekennzeichnet, daß** das Aufnahmeteil (1) thermoplastischen Kunststoff aufweist.

6. Fluidkupplung nach einem der Ansprüche 1 bis 5, **dadurch gekennzeichnet, daß** die beiden Abschnitte (1a₁, 1a₂; 1a₃, 1a₄) des Aufnahmeteils (1) durch Reib- oder Ultraschallschweißen verbunden sind.

## Claims

1. A fluid coupling comprising a tubular receiving member (1) and a tubular plug member (2) which can be plugged together and arrested in that position, and a sealing ring (3) arranged between the plug member (2) and the receiving member (1) in an annular groove (19) in the receiving member (1), wherein the receiving member (1) has two portions (1a₁, 1a₂; 1a₃, 1a₄) which are plugged together and welded and which jointly delimit the annular groove (19), and the one portion (1a₁; 1a₄) is introduced with its one end into a groove (11) which is concentric with respect to the central longitudinal axis of said portion (1aₐ; 1a₄) and which is provided in the end face of the other end of the other portion (1a₂; 1a₃), **characterised in that** the portion (1a₁; 1a₄) which is introduced into the groove (11) in the end face is welded with its end face to the bottom (12) of said groove (11) and the end of the one portion (1a₁; 1a₄) has an axially projecting annular ridge (13) which engages into a first peripherally extending channel (14) in the bottom (12) of the groove (11) on the one side of the weld seam (15).

2. A fluid coupling according to claim 1 **characterised in that** the bottom (12) of the groove (11) in the end face has a second peripherally extending channel (16) on the other side of the weld seam (15).

3. A fluid coupling according to claim 1 or claim 2 **characterised in that** the position of the weld seam (15) is so selected that, when the plug member (2) is inserted, the sealing ring (3) seals off the weld seam (15) in relation to contact with the fluid.

4. A fluid coupling according to one of claims 1 to 3 **characterised in that** the receiving member (1) has a first tube portion (1a) having the welded portions (1a₁, 1a₂; 1a₃, 1a₄) and a second tube portion (1b) which is at an angle to the first tube portion (1a), that the plug member (2) can be assembled to the first tube portion (1 in a predetermined relative rotational angle position and can be arrested **in that** position to the first tube portion (1a), and that the two portions (1a₁, 1a₂; 1a₃, 1a₄) of the first tube portion (1a) are welded in such a relative rotational angle position that in the assembled condition of the receiving member (1) and the plug member (2) the second tube portion (1b) is in the predetermined rotational angle position relative to the plug member (2).

5. A fluid coupling according to one of claims 1 to 4 **characterised in that** the receiving member (1) comprises thermoplastic material.

6. A fluid coupling according to one of claims 1 to 5 **characterised in that** the two portions (1a₁, 1a₂; 1a₃, 1a₄) of the receiving member (1) are joined by frictional or ultrasonic welding.

## Revendications

1. Raccord pour fluide comportant une partie tubulaire de réception (1) et une partie tubulaire enfichable (2) qui sont aptes à être enfichées l'une dans l'autre et à être arrêtées dans cette position, et comportant une bague d'étanchéité (3) agencée dans une gorge annulaire (19) de la partie de réception (1) entre la partie enfichable (2) et la partie de réception (1), la partie de réception (1) comprenant deux portions enfichées et soudées (1a₁, 1a₂; 1a₃, 1a₄) qui délimitent conjointement la gorge annulaire (19), l'une des portions (1a₁; 1a₄) étant introduite par l'une de ses extrémités dans une gorge (11), située du côté frontal et concentrique par rapport à l'axe longitudinal central de cette portion (1a₁; 1a₄), de l'une des extrémités de l'autre portion (1a₂; 1a₃), **caractérisé en ce que** la portion (1a₁; 1a₄) introduite dans la gorge (11) du côté frontal est soudée par sa surface frontale au fond (12) de cette gorge (11), et l'extrémité de ladite une portion (1a₁; 1a₄) comprend un bourrelet annulaire (13) axialement en saillie qui vient s'engager dans une première rainure périphérique (14) au fond (12) de la gorge (11) sur un côté du cordon de soudure (15).

2. Raccord pour fluide selon la revendication 1, **caractérisé en ce que** le fond (12) de la gorge (11) du côté frontal présente une deuxième rainure périphérique (16) sur l'autre côté du cordon de soudure (15).

3. Raccord pour fluide selon la revendication 1 ou 2, **caractérisé en ce que** la position du cordon de soudure (15) est choisie telle que la bague d'étanchéité (3) étanche le cordon de soudure (15) à l'encontre d'un contact avec le fluide lorsque la partie enfichable (2) est enfichée.

4. Raccord pour fluide selon l'une des revendications 1 à 3, **caractérisé en ce que** la partie de réception (1) comprend un premier tronçon tubulaire (1a) comprenant les portions soudées (1a₁, 1a₂; 1a₃, 1a₄) et un deuxième tronçon tubulaire (1b) situé sous un angle par rapport au premier tronçon tubulaire (1a), **en ce que** la partie enfichable (2) est susceptible d'être assemblée avec le premier tronçon tubulaire (1a) dans une position angulaire relative prédéterminée, et d'être arrêtée dans cette position sur le premier tronçon tubulaire (1a), et **en ce que** les deux portions (1a₁, 1a₂; 1a₃, 1a₄) du premier tronçon tubulaire (1a) sont soudées dans une position angulaire relative telle que le deuxième tronçon tubulaire (1b) présente, dans l'état assemblé de la partie de réception (1) et de la partie enfichable (2), la position angulaire prédéterminée par rapport à la partie enfichable (2).

5. Raccord pour fluide selon l'une des revendications 1 à 4, **caractérisé en ce que** la partie de réception (1) est en matière synthétique thermoplastique.

6. Raccord pour fluide selon l'une des revendications 1 à 5, **caractérisé en ce que** les deux portions (1a₁, 1a₂; 1a₃, 1a₄) de la partie de réception (1) sont reliées par soudage par friction ou par ultrasons.
